# EUROPEAN PATENT APPLICATION

(11) **EP 4 203 085 A1**
(43) Date of publication of application: **28.06.2023**
(21) Application number: 21306900.8
(22) Date of filing: 22.12.2021
(51) Int. Cl.: H01M 4/04, H01M 4/139, H01M 4/62, H01M 10/0525

(54) **BINDER FOR DRY-COATED ELECTRODE**

(71) Applicant: ARKEMA FRANCE, 92700 Colombes (FR)
(72) Inventor: FUKUYAMA, Takehiro, KYOTO, 600-8815 (JP); BIZET, Stephane, 27470 SERQUIGNY (FR); MARCHAL, Laureline, 69491 PIERRE-BENITE CEDEX (FR)
(74) Representative: Arkema Patent

(57) **Abstract**

The present invention relates generally to the field of electrical energy storage in the lithium storage batteries of Li-ion type. More specifically, the invention relates to a non-fibrillizable binder for a dry-coated electrode for Li-ion battery. Another subject matter of the invention is a process for making an electrode using said binder. The invention also concerns the lithium-ion batteries manufactured by incorporating said electrode.

## Description

### FIELD OF THE INVENTION

The present invention relates generally to the field of electrical energy storage in the lithium storage batteries of Li-ion type. More specifically, the invention relates to a non-fibrillizable binder for a dry-coated electrode for Li-ion battery. Another subject matter of the invention is a process for making an electrode using said binder. The invention also concerns the lithium-ion batteries manufactured by incorporating said electrode.

### TECHNICAL BACKGROUND

An elementary cell of a Li-ion storage battery or lithium battery comprises an anode (at discharge), and a cathode (likewise at discharge) generally made of a lithium insertion compound of metal oxide type, such as LiMn₂O₄, LiCoO₂ or LiNiO₂, between which is inserted an electrolyte which conducts lithium ions.

Rechargeable or secondary cells are more advantageous than primary (non-rechargeable) cells because the associated chemical reactions that take place at the positive and negative electrodes of the battery are reversible. The electrodes of secondary cells can be regenerated several times by applying an electrical charge. Many advanced electrode systems have been developed to store electrical charge. At the same time, much effort has been devoted to the development of electrolytes capable of improving the capabilities of electrochemical cells.

For their part, the electrodes generally comprise at least one current collector on which is deposited, in the form of a film, a composite material consisting of: a so-called active material because it has an electrochemical activity with respect to lithium, a polymer which acts as a binder, plus one or more electronically conductive additives which are generally carbon black or acetylene black, and optionally a surfactant.

Binders are counted among the so-called inactive components because they do not directly contribute to the cell capacity. However, their key role in electrode processing and their considerable influence on the electrochemical performance of electrodes have been widely described. The main relevant physical and chemical properties of binders are: thermal stability, chemical and electrochemical stability, tensile strength (strong adhesion and cohesion), and flexibility. The main objective of using a binder is to form stable networks of the solid components of the electrodes, i.e. the active materials and the conductive agents (cohesion). In addition, the binder must ensure close contact of the composite electrode to the current collector (adhesion).

Poly(vinylidene fluoride) (PVDF) is the most commonly used binder in lithium-ion batteries because of its excellent electrochemical stability, good bonding capability and high adhesion to electrode materials and current collectors. PVDF can only be dissolved in certain organic solvents such as N-Methyl pyrrolidone (NMP), which is volatile, flammable, explosive, and highly toxic, leading to serious environment concern.

Compared to the conventional wet-suspension electrode manufacturing method, dry (solvent-free) manufacturing processes are simpler; these processes eliminate the emission of volatile organic compounds, and offer the possibility of manufacturing electrodes with higher thicknesses (> 120µm), with a higher energy density of the final energy storage device. The change in production technology will have little impact on the active material of the electrodes, however, the polymer additives responsible for the mechanical integrity of the electrodes must be adapted to the new manufacturing conditions.

The publication of Wang et al. (J. Electrochem. Soc. 2019 166(10): A2151-A2157) has investigated the effects of the molecular weight of PVDF binders on the electrochemical performance and mechanical integrity of the LiNi_{0.33}Co_{0.33}Mn_{0.33}O₂ (NMC) electrodes made by a dry-powder-coating process. It shows that a thin PVDF layer can form on the NMC particle surface after heating the PVDF to above its melting point. The microstructure and porosity of the PVDF layer depend strongly on the molecular weight of the PVDF. With increasing molecular weight, the PVDF layer becomes more porous, improving the high-rate capacity without decreasing binding strength and long-term cycling performance of the electrodes. However, these results require a thermal activation process (baking for 1h at 200°C), which increases the manufacturing cost of the Li-battery.

There is still a need to develop new binders and electrode compositions for Li-ion batteries that are suitable for processing without the use of organic solvents.

### SUMMARY OF THE INVENTION

Thus, the invention is directed to providing a binder for dry-coated electrode for a Li-ion battery.

It is a first object of the invention to provide a non-fibrillizable binder for a dry-coated electrode, said binder consisting of a fluoropolymer powder having a particle size distribution with D50 less than 10 µm and D90 less than 25µm.

The invention also aims to provide a dry-coated electrode for Li-ion battery comprising said binder.

The invention also relates to a process for making a dry-coated electrode, said process comprising the following steps:
- mixing the active filler, the polymeric binder and the conductive filler using a process that provides an electrode formulation applicable to a metal substrate by a "solventless" process;
- depositing said electrode formulation on the metal substrate by a dry process to obtain a Li-ion battery electrode, and
- consolidating said electrode by a mechanical and/or thermo-mechanical treatment.

Another object of the invention is a Li-ion secondary battery comprising a negative electrode, a positive electrode and a separator, wherein at least one electrode is as described above.

The present invention makes it possible to address the need mentioned above. In particular, it provides a technology that allows to:
- ensure the cohesion and mechanical integrity of the electrode, guaranteeing a good filmification or consolidation of the formulations that can be difficult to achieve for solventless processes;
- generate adhesion on the metal substrate;
- ensuring homogeneity of the electrode composition across the thickness and width of the electrode;
- ensure its homogeneity in the thickness and width of the electrode;
- reduce the overall binder content in the electrode, which in the case of known dry processes is still higher than in a standard slurry process,

The advantage of this technology is to improve the following properties of the electrode: the homogeneity of the composition in the thickness, the cohesion, and the adhesion on the metallic substrate. It also allows the reduction of the binder rate required in the electrode, as well as the reduction of the temperature and duration of the heat treatment needed to improve the adhesion.

### BRIEF DESCRIPTION OF THE DRAWINGS

Figure 1 is a diagram illustrating the peel strength results of four cathodes amongst which n° 2 and 4 contain a binder according to the invention.
Figure 2 is a diagram illustrating the peel strength results of four anodes amongst which n° 2 and 4 contain a binder according to the invention.

### DETAILED DESCRIPTION OF THE INVENTION

The invention is now described in more detail in the following description.

The invention relates first to a non-fibrillizable binder for a dry-coated electrode, said binder consisting of a fluoropolymer powder having a particle size distribution with a D50 less than 10 µm, preferably less than 5µm, and a D90 less than 25µm, preferably less than 15µm.

According to various embodiments, said binder includes the following features, where applicable combined.

The Dv50 is the particle size at the 50th percentile (in volume) of the cumulative size distribution of particles. This parameter can be determined by laser granulometry. This applies to all Dv50 recited in the present description.

The D90 is the particle size at the 90th percentile (in volume) of the cumulative size distribution of particles. This parameter can be determined by laser granulometry. This applies to all Dv90 recited in the present description.

The term "fluoropolymer" means a polymer formed by the polymerization of at least one fluoromonomer, and it is inclusive of homopolymers, copolymers, terpolymers and higher polymers which are thermoplastic. The fluoropolymer in certain embodiments of the invention contains at least 50 mole percent of one or more fluoromonomers, in polymerized form.

"Thermoplastic" is understood here to mean a non-elastomeric polymer. An elastomeric polymer is defined as being a polymer which can be drawn, at ambient temperature, to twice its initial length and which, after releasing the stresses, rapidly resumes its initial length, to within about 10%, as indicated by the ASTM in the Special Technical Publication, No. 184.

Fluoromonomers useful in the practice of the invention include, for example, vinylidene fluoride (VDF or VF2), tetrafluoroethylene (TFE), trifluoroethylene, chlorotrifluoroethylene (CTFE), hexafluoropropene (HFP), vinyl fluoride, hexafluoroisobutylene, perfluorobutylethylene (PFBE), pentafluoropropene, 3,3,3-trifluoro-1-propene, 2,3,3,3-tetrafluoropropene, fluorinated vinyl ethers, fluorinated allyl ethers, fluorinated dioxoles, and combinations thereof.

Especially preferred copolymers made by the process of the invention are copolymers of VDF with HFP, TFE or CTFE, comprising from about 50 to about 99 weight percent VDF, more preferably from about 70 to about 99 weight percent VDF.

The term "PVDF" employed here comprises vinylidene fluoride (VDF) homopolymers or copolymers of VDF and of at least one other comonomer in which the VDF represents at least 50 % by weight.

In some embodiments, the fluoropolymer is chosen from: homopolymers and copolymers of vinylidene fluoride preferably containing at least 50% by weight of VDF, the comonomer being chosen from chlorotrifluoroethylene, hexafluoropropylene, trifluoroethylene and tetrafluoroethylene.

Preferably, the fluoropolymer is polyvinylidene fluoride (PVDF) homopolymer or a copolymer of vinylidene fluoride with hexafluoropropylene in which the level of HFP is less or equal to 50% by weight and preferably less or equal to 40%wt.

The non-fibrillizable binder according to the invention comprises one or more fluoropolymers.

The fluoropolymer further comprises monomers with at least one functionality chosen from carboxyl, epoxy, carbonyl or hydroxyl. Examples of monomers able to introduce carboxyl functionalities are unsaturated monobasic acid or unsaturated dibasic acid monomers in free acid, salt form, or anhydride form, selected from the group consisting of sulfonic acid groups, phosphonic acid groups and carboxylic acid groups and salts or anhydrides thereof. Such monomers are acrylic acid, methacrylic acid, vinyl sulfonic acid, vinyl phosphonic acid, itaconic acid, maleic acid, and salts of such compounds. Examples of monomers able to introduce epoxy functionalities are allyl glycidyl ether, methallyl glycidyl ether, crotonic acid glycidyl ether, and acetic acid glycidyl ether. Examples of monomers able to introduce carbonyl functionalities are ethylene carbonate. Examples of monomers able to introduce hydroxyl functionalities are hydroxyl ethyl acrylate and hydroxyl propyl acrylate.

The functionalized monomers may be used in an amount of from 0.01 to 15 weight percent based on total monomer. Preferably, they are used in an amount from 0.05 to 5 weight percent based on total monomer, and even more preferably in an amount from 0.05 to 1.5 weight percent based on total monomer.

The functionalized fluoropolymer is primarily produced via heterogeneous polymerization reactions, including suspension, emulsion and microemulsion systems. Generally, each of these reactions requires at least one acid-functionalized monomer or salt thereof, at least one fluoromonomer and a radical initiator in a suitable reaction medium. In addition, emulsion polymerizations of halogen-containing monomers generally require a surfactant capable of emulsifying both the reactants and the reaction products for the duration of the polymerization reaction.

According to one embodiment, the fluoropolymers used in the present invention are prepared by an emulsion polymerization process in the absence of a fluorinated surfactant.

In some variants, a process similar to that disclosed in document WO 2012/030784 may be used to prepare the functionalized fluoropolymers used in the present invention. The temperature used for polymerization may vary from 20 to 130°C. The pressure used for polymerization may vary from 280-20,000 kPa.

A pressurized polymerization reactor equipped with a stirrer and heat control means is charged with water, preferably deionized water, one or more functionalized monomers and at least one fluoromonomer. The mixture may optionally contain one or more of a surfactant, a buffering agent, an antifoulant or a chain-transfer agent for molecular weight regulation of the polymer product. Prior to introduction of the monomer or monomers, air is preferably removed from the reactor in order to obtain an oxygen- free environment for the polymerization reaction. The order in which the polymerization components are assembled may be varied, although it is generally preferred that at least a portion of the functionalized monomer is present in the aqueous reaction medium prior to the initiation of the polymerization of the fluoromonomer. An additional amount of functionalized monomer may be fed to the reactor during the reaction.

In one embodiment, water, initiator, functionalized monomer and optionally surfactant, antifoulant, chain transfer agent and/or buffer are charged to the reactor, and the reactor heated to the desired reaction temperature. The fluoromonomer(s) is(are) then fed into the reactor, preferably at a rate which provides an essentially constant pressure. Alternatively the fluoromonomer, functionalized monomer and initiator can be fed to the reactor, along with one or more of the optional ingredients. The monomer feed is terminated when the desired weight of monomer has been fed to the reactor. Additional radical initiator is optionally added, and the reaction is allowed to react out for a suitable amount of time. The reactor pressure drops as the monomer within the reactor is consumed.

Upon completion of the polymerization reaction, the reactor is brought to ambient temperature and the residual unreacted monomer is vented to atmospheric pressure. The aqueous reaction medium containing the fluoropolymer is then recovered from the reactor as a latex. The latex consists of a stable mixture of the reaction components, i.e., water, surfactant, initiator (and/or decomposition products of the initiator) and functionalized fluoropolymer solids. The latex may contain from about 10 to about 50 weight percent polymer solids, preferably from 20 to 40% by weight. The polymer in the latex is in the form of small particles having a size range of from about 30 nm to about 800 nm.

Following polymerization, the polymer is agitated, thickened and dried.

The fluoropolymer powder may be obtained by various processes. The powder may be obtained directly by an emulsion or suspension synthesis process by drying by spray drying or by freeze drying. The powder may also be obtained by milling techniques, such as cryo-milling, where the product is brought to a temperature lower than room temperature, by means of liquid nitrogen as an example, prior to milling.

The fluoropolymer powder has a particle size characterized by a diameter Dv50 of less than 10 µm and a Dv90 of less than 25 µm. At the end of the powder manufacturing step, namely after the polymerization and the drying steps, the particle size can be adjusted and optimized by selection or screening methods and/or by milling in case of the Dv50 and Dv90 are above 10µm and 25µm respectively.

A suitable method for reducing the particles sizes of non-fibrillizable binder is the pressurized jet milling process. For example, a non-fibrillizable binder can be placed into an air-jet mill and "air-jet milled" to reduce the particle size to have the Dv50 of less than 10 µm and Dv90 of less than 25 µm.

The invention also aims to provide a dry-coated electrode for Li-ion battery comprising said non-fibrillizable binder, a conductive agent and a dry active material.

The mass composition of the dry-coated electrode is :
- 50% to 99.9% active material, preferably 50% to 99.9%,
- 25% to 0.05% conductive agent, preferably 25 to 0.5%,
- 25 to 0.05% non-fibrillizable binder, preferably 25 to 0.5%,
- 0 a 5% of at least an additive chosen among the list: plasticizer, ionic liquid,
dispersing agent for agent for conductive additive, flowing aid agent, the sum of all these percentages being 100%.

The conductive agents in the dry-coated electrode comprise of one or more material that can improve conductivity. Some examples include carbon blacks such as acetylene black, Ketjen black; carbon fibers such as carbon nanotube, carbon nanofiber, vapor growth carbon fiber; metal powders such as SUS powder, and aluminum powder.

The active materials are materials that are capable of storing and releasing lithium ions.

According to one embodiment, said electrode is an anode.

According to an embodiment, said electrode is a cathode.

Some examples of the positive electrode active material are LiCoO₂, Li(Ni,Co,AI)O₂, Li(i+x), NiaMnbCoc (x represents a real number of 0 or more, a=0.8, 0.6, 0.5, or 1/3, b=0.1, 0.2, 0.3, or 1/3, c=0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a different element-substituted Li Mn spinel having a composition represented by Li₁₊ₓMn_{2-x-y}M_{y}O₄ (wherein M represents at least one metal selected from Al, Mg, Co, Fe, Ni, and Zn, x and y independently representing a real number between 0 to 2), lithium titanate (LiₓTiO_{y} - x and y independently representing a real number between 0 to 2), and a lithium metal phosphate having a composition represented by LiMPO₄ (M represents Fe, Mn, Co, or Ni). Among these, Ni_{0.8}Mn_{0.1}Co_{0.1}, is preferably used as the positive electrode active material.

In addition, the surface of each of the above-described materials may be coated. The coating material is not particularly limited as long as it has lithium ion conductivity and contains a material capable of being maintained in the form of a coating layer on the surface of the active material. Examples of the coating material include LiNbO₃, Li₄Ti₅O₁₂, and Li₃PO₄.

The shape of the positive electrode active material is not particularly limited but is preferably particulate.

Some examples of the negative electrode active material are lithium alloy, a metal oxide, a carbon material such as graphite or hard carbon, silicon, a silicon alloy, and Li₄TiO₁₂. Graphite is preferable.

The shape of the negative electrode active material is not particularly limited but is preferably particulate.

The invention also relates to a process for making a dry-coated electrode, said process comprising the following steps:
- mixing the active material, the non-fibrillizable polymeric binder in powder form as described above, and the conductive agent using a process that provides an electrode formulation applicable to a metal substrate by a "solventless" process;
- depositing said electrode formulation on a substrate by a solventless process to obtain a Li-ion battery electrode, and
- consolidation of said electrode by thermo-mechanical treatment (application of a temperature up to 50°C above the melting temperature of the polymer, with mechanical pressure),

A "solventless" process is one that does not require a residual solvent evaporation step after the deposition step.

According to one embodiment, after the powder mixing step, the electrode is manufactured by a solvent less spraying process, by depositing the formulation on the metallic substrate by a pneumatic spraying process, by electrostatic spraying, by dipping in a fluidized powder bed, by sprinkling, by electrostatic screen printing, by deposition with rotative brushes, by deposition with dosing rotative rolls, by calendering.

According to one embodiment, after the powder mixing step, the electrode is manufactured by a solvent-less spraying process in two steps. A first step consists in manufacturing a free-standing film from the pre-mixed formulation with a thermo-mechanical process like extrusion, calendering or thermos-compression. In a second step, the free-standing film is laminated onto the metallic substrate by a process combining temperature and pressure like calendering or thermo-compression.

The mass ratio of conductive agents with respect to the active material is preferably from 0.1 to 10 %, more preferably from 0.5 to 7 %.

The mass ratio of binder with respect to the active material is preferably from 0.1 to 10 %, more preferably from 0.5 to 7 %.

According to one embodiment, the electrode components are all mixed at once according to conventional methods, leading to an electrode formulation.

In one embodiment, said electrode formulation is applied to a substrate by electrostatic screen-printing. Some examples of substrate are current collectors such as metal foil and metal mesh, polymer films, or solid electrolyte layer of a solid-state battery.

The preferred thickness of an electrode is from 0.1 µm to 1000 µm, preferably from 0.1 µm to 300 µm.

Another subject matter of the invention is a Li-ion battery comprising a positive electrode, a negative electrode and a separator, wherein at least one electrode is a dry-coated electrode as described above.

### EXAMPLES

The following example illustrates the invention without limiting it.

### Materials:

PVDF 1: Homopolymer of vinylidene fluoride functionalized with acrylic acid moiety with a functionality rate of about 1 wt % and a melting temperature of 165°C.
PVDF 2: Copolymer of vinylidene fluoride and hexafluoropropylene (about 5 % by weight of HFP) with acrylic acid moiety with a functionality of about 1% by weight characterized by a melting temperature of 145°C.

### Methods:

Particle size distribution measurement: a Malvern INSITEC System particle size analyzer is used and the measurement is carried out by the dry route by laser diffraction on the powder with a focal of 100 mm.

The melting temperature is measured by DSC (differential scanning calorimetry) according to the standard ISO 11357-3 and is taken at the peak of the melting endotherm.

### Decreasing particle size of binders

PVDF1 and PVDF 2 were air jet milled with a lab-scale equipment from Hosokawa to reduce the particle size.

### Cathode 1

LMO, Super P Li(Imerys) and PVDF1 were added to a 100 ml plastic bottle with lid. The ratio of LMO, Super P Li, and PVDF1 was 90:5:5 by weight. The powder was mixed on a mix rotor at 110 rpm. for 1 hour. The mixed powder was applied to an aluminum foil by TS-1 (Electrostatic screen printing equipment, Berg Co., Ltd.) at 1 kV, foil placed 1 cm apart from the screen. The printed powder with the foil was compressed in a roll press(SA-602, TESTER SANGYO CO., LTD.) at r.t., 29.4 kN load, 0.5 m/min. speed. The prepared electrode was tested for peel strength following 180° peel test method from ASTM D903 with some modifications.

### Cathode 2

The same method as in Cathode 1 preparation was used except binder was changed to PVDF1 air jet milled.

### Cathode 3

The same method as in Cathode 1 preparation was used except binder was changed to PVDF2.

### Cathode 4

The same method as in Cathode 1 preparation was used except binder was changed to PVDF2 air jet milled.

### Anode 1

158-C (graphite, BTR) and PVDF1 were added to a 100 ml plastic bottle with lid. The ratio of 158-C and PVDF1 was 95:5 by weight. The powder was mixed on a mix rotor at 110 rpm for 1 hour. The mixed powder was applied to a copper foil by TS-1 (Electrostatic screen printing equipment, Berg Co., Ltd.) at 1 kV, foil placed 1 cm apart from the screen. The printed powder with the foil was compressed in a roll press (SA-602, TESTER SANGYO CO., LTD.) at 60°C, 14.7 kN load, 0.5 m/min. speed. The prepared electrode was tested for peel strength following 180° peel test method from ASTM D903 with some modifications. Peel strength values below 1 N/m were considered as not OK (abbreviated "NOK") as the electrode is too fragile to be handled.

### Anode 2

The same method as in Anode 1 preparation was used except binder was changed to PVDF1 air jet milled.

### Anode 3

The same method as in Anode 1 preparation was used except binder was changed to PVDF2.

### Anode 4

The same method as in Anode 1 preparation was used except binder was changed to PVDF2 air jet milled.

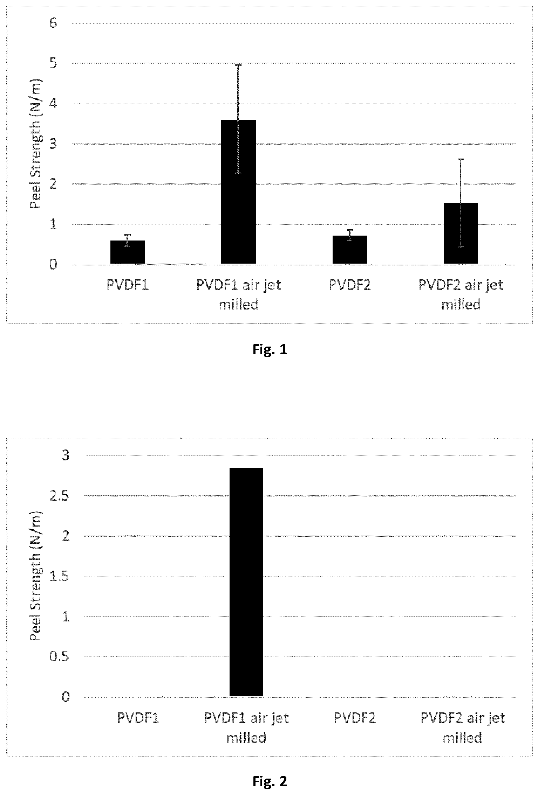

The peel test results are shown in figures 1 and 2.

Figure 1 shows the peel test results of Cathodes 1, 2, 3, and 4.

Figure 2 shows peel test results of Anodes 1, 2, 3, and 4.

A homogeneous electrode was not obtained in Anodes 1, 3, and 4, so the peel tests were not conducted.

The Particle Size Distribution (PSD) of non-fibrillizable binder and Adhesion results are shown in Table 1 below.

**Table 1**

| | D50 (µm) | D90 (µm) | Adhesion result |
|---|---|---|---|
| PVDF1 | 8.2 | 26.5 | NOK |
| PVDF1 air jet milled | 1.0 | 2.5 | OK |
| PVDF2 | 8.3 | 29.4 | NOK |
| PVDF2 air jet milled | 1.8 | 7.0 | OK |

## Claims

1. A non-fibrillizable binder for a dry-coated electrode, said binder consisting of a fluoropolymer powder having a particle size distribution with a D50 less than 10 µm, preferably less than 5µm, and a D90 less than 25µm, preferably less than 15µm.

2. The binder according to claim 1 wherein said fluoropolymer comprises at least one fluoromonomer selected from: vinylidene fluoride, tetrafluoroethylene, trifluoroethylene, chlorotrifluoroethylene, hexafluoropropene, vinyl fluoride, hexafluoroisobutylene, perfluorobutylethylene, pentafluoropropene, 3,3,3-trifluoro-1-propene, 2,3,3,3-tetrafluoropropene, fluorinated vinyl ethers, fluorinated allyl ethers, fluorinated dioxoles.

3. The binder according to one of claims 1 or 2 wherein said fluoropolymer is chosen from: homopolymers and copolymers of vinylidene fluoride containing at least 50% by weight of VDF, the comonomer being chosen from chlorotrifluoroethylene, hexafluoropropylene, trifluoroethylene and tetrafluoroethylene.

4. The binder according to any one of claims 1 to 3, wherein the fluoropolymer is polyvinylidene fluoride (PVDF) homopolymer or a copolymer of vinylidene fluoride with hexafluoropropylene.

5. The binder according to any one of claims 1 to 4, wherein said fluoropolymer comprises functionalized monomers in an amount of from 0.01 to 15 weight percent based on total monomer, preferably, from 0.05 to 5 weight percent based on total monomer and even more preferably in an amount from 0.05 to 1.5 weight percent based on total monomer.

6. The binder according to claim 5, wherein said functionalized monomers with at least one functionality are chosen from: acrylic acid, methacrylic acid, vinyl sulfonic acid, vinyl phosphonic acid, itaconic acid, maleic acid, and salts of such compounds; allyl glycidyl ether, methallyl glycidyl ether, crotonic acid glycidyl ether, and acetic acid glycidyl ether; ethylene carbonate; hydroxyl ethyl acrylate and hydroxyl propyl acrylate.

7. Dry-coated electrode comprising the non-fibrillizable binder of any of claims 1 to 6, a conductive agent and a dry active material.

8. The dry-coated electrode of claim 7, having the following mass composition:
- 50% to 99.9% active material, preferably 50% to 99.9%,
- 25% to 0.05% conductive agent, preferably 25 to 0.5%,
- 25 to 0.05% non-fibrillizable binder, preferably 25 to 0.5%,
- 0 a 5% of at least an additive chosen among the list: plasticizer, ionic liquid, dispersing agent for agent for conductive additive, and flowing aid agent.
the sum of all these percentages being 100%.

9. The dry-coated electrode of any of claims 7 or 8, wherein said conductive agents comprise of one or more material from carbon blacks, such as acetylene black, Ketjen black; carbon fibers, such as carbon nanotube, carbon nanofiber, vapor growth carbon fiber; metal powders such as SUS powder, and aluminum powder.

10. The dry-coated electrode of any of claims 7 to 9, wherein for a positive electrode said active material is selected from: LiCoO₂, Li(Ni,Co,AI)O₂, Li₍₁₊ₓ₎, NiaMnbCoc (x represents a real number of 0 or more, a=0.8, 0.6, 0.5, or 1/3, b=0.1, 0.2, 0.3, or 1/3, c=0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a different element-substituted Li Mn spinel having a composition represented by Li₁₊ₓMn_{2-x-y}M_{y}O₄, wherein M represents at least one metal selected from Al, Mg, Co, Fe, Ni, and Zn, x and y independently representing a real number between 0 to 2, lithium titanate LiₓTiO_{y} - x and y independently representing a real number between 0 to 2, and a lithium metal phosphate having a composition represented by LiMPO₄, M representing Fe, Mn, Co, or Ni.

11. The dry-coated electrode of any of claims 7 to 9, wherein for a negative electrode said active material is selected from: lithium alloy, a metal oxide, a carbon material such as graphite or hard carbon, silicon, a silicon alloy, and Li₄TiO₁₂.

12. Process for making for making the dry-coated electrode of any of claims 7 to 11, said process comprising the following steps:
- mixing the active material, the non-fibrillizable polymeric binder in powder form, and the conductive agent using a process that provides an electrode formulation applicable to a metal substrate by a solventless process;
- depositing said electrode formulation on a substrate by a solventless process to obtain a Li-ion battery electrode, and
- consolidation of said electrode by thermo-mechanical treatment.

13. Li-ion battery comprising a positive electrode, a negative electrode and a separator, wherein at least one electrode is a dry-coated electrode according to any of claims 7 to 11.
